# EUROPEAN PATENT APPLICATION

(11) **EP 1 569 110 A2**
(43) Date of publication of application: **31.08.2005**
(21) Application number: 04256916.0
(22) Date of filing: 08.11.2004
(51) Int. Cl.: G06F 9/46

(54) **A method for managing execution of a process based on available services**

(30) Priority: 10.11.2003 US 705143
(71) Applicant: Hewlett-Packard Development Company, L.P., Houston, TX 77070 (US)
(72) Inventor: Parkyn, Nicholas D., Toronto, ON M1P 5E1 (CA)
(74) Representative: Tollett, Ian

(57) **Abstract**

Methods and systems of managing execution of a process are described. A request to execute the process is received (605), wherein the process comprises a plurality of services. The availability of at least one service of the plurality of services is determined (620). If at least one service is not available, execution of the process is suspended (630). The suspended process is queued (645) for subsequent execution.

## Description

Embodiments of the present invention relate to methods and systems for managing execution of a business process including process-based, software-based or Web-based services that are invoked locally (same system or local area network [LAN]) or remotely (wide area network [WAN] or Internet [Web]). More specifically, embodiments of the present invention relate to methods and systems for managing execution of a business process based on available services.

Operational support systems (OSS) and business support systems (BSS) enable service providers and telecommunications companies to provide businesses and the like with access to software and connectivity, perhaps of a specialized nature, bundled in a way that businesses find useful. In general, a provider of such a service hosts and manages application software or application software components that perform a particular function or functions. The software may be exposed across the Internet so that it can be called and used by remote business processes. The OSS and BSS systems themselves are based on application software components that perform a particular function or functions that are provided locally within a local computing system, a LAN, or a WAN at the service provider site of co-location. Processes are used to aggregate services in an orchestrated way using business logic; however, processes themselves can be services often higher level services. These processes include business-related processes that enable business functionality and utilize underlying infrastructure services to provide the lower levels of functionality down to and including the network layer. Interaction between services can be point-to-point or point-to-multipoint (request response or publish and subscribe) using integrated service management, integrated message-oriented middleware, the Internet, a WAN or LAN (e.g., Web services using HyperText Transfer Protocol), lower level transport protocols, or a combination of these.

In a service-based environment, it is fundamentally important to understand the functionality that a service provides and how to interact with the service. That is, it is important to facilitate:
- service discovery (finding services, or services that are available);
- service functionality (the functionality and expected behavior of the service); and
- service location (how to connect to, or bind with, the service).

Accordingly, descriptions of the functionality and location (e.g., functionality and bind information) of a service are stored in a defined repository in a standardized form (often referred to as a contract or service definition). Examples of this are UDDI (Universal Description, Discovery and Integration) service definitions defined in WSDL (Web Service Definition Language) and TMF NGOSS (TeleManagement Forum Next Generation Operations System Support) contracts.

In essence, a contract or service description describes the type of service provided by an application software component and what information is needed to invoke that service. The bind information provided by the contract includes, for example, a Uniform Resource Locator (URL) for a web based application software component. Other information, such as commercial terms, parameters for invoking the software, limitations on those parameters, and the like, can also be provided by the contract.

An application or service makes a trade request or search request on the service repository in order obtain a contract or service definition. This trade request or search request can be an explicit request for an exact match to service type/description parameters, or a wildcard-based request (e.g., advise the user of all the service which meet some less stringent base criteria). The responses to the wildcard request can be validated as to possible suitability.

A problem can occur when a service process, executing locally or remotely, attempts to use another service and the software, script or process providing that service is not available, perhaps due to maintenance or lack of connectivity. If a service attempts to use another service which is not available, the interaction will fail to complete or timeout. This can result in unexpected delays, unacceptable or unexpected behavior that may be unacceptable, especially when completion of a higher level task, activity, service or process which depends on the outcome of this interaction is subject to a service level agreement that might impose financial penalties when performance goals are not met.

Furthermore, starting a process, script or higher-level service but not being able to complete it can unnecessarily consume available computational resources of the process engine, not only during the partial execution, but also while the process, script or higher-level service is idled waiting for a response. For example, a process that is started but not completed can still consume processor and memory resources while idling. There may be many processes running in parallel, and as more and more of the processes are idled, more and more resources are used, perhaps degrading performance for those processes that are still running. Eventually, the computational resources will be prevented from operating (e.g., starting and running new processes) due to the large amount of idling processes consuming all the resources.

Accordingly, a method and/or system that can avoid the problems described above would be of value. Embodiments of the present invention provide this and other advantages.

Embodiments of the present invention provide methods and systems of managing execution of a process. In one embodiment, a request to execute the process is received, wherein the process comprises a plurality of services. The availability of at least one service of the plurality of services is determined. If at least one service is not available, execution of the process is suspended. The suspended process is queued for subsequent execution.

The accompanying drawings, which are incorporated in and form a part of this specification, illustrate a number of preferred embodiments of the invention.
Figure 1 is a diagram showing the flow of information between blocks in a service discovery architecture according to one embodiment of the present invention.
Figure 2 is a diagram showing the flow of information between blocks in a service discovery architecture according to another embodiment of the present invention.
Figure 3 is a flowchart of a method for service discovery according to one embodiment of the present invention.
Figure 4 is a flowchart of a method for performing a process according to one embodiment of the present invention.
Figure 5 is a diagram showing the flow of information between blocks in a process execution management architecture according to one embodiment of the present invention.
Figures 6A and 6B are a flowchart of a method of managing execution of a process using "up front" service discovery according to one embodiment of the present invention.
Figure 7 is a flowchart of a method of managing execution of a process using "as required" service discovery according to one embodiment of the present invention.

The drawings referred to in this description should not be understood as being drawn to scale except if specifically noted.

Reference will now be made in detail to various embodiments of the invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the scope of the invention as defined by the appended claims. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

Aspects of the present invention may be practiced on a computer system that includes, in general, a processor for processing information and instructions, random access (volatile) memory (RAM) for storing information and instructions, read-only (non-volatile) memory (ROM) for storing static information and instructions, a data storage device such as a magnetic or optical disk and disk drive for storing information and instructions, an optional user output device such as a display device (e.g., a monitor) for displaying information to the computer user, an optional user input device including alphanumeric and function keys (e.g., a keyboard) for communicating information and command selections to the processor, and an optional user input device such as a cursor control device (e.g., a mouse) for communicating user input information and command selections to the processor.

### STATUS INFORMATION FOR SOFTWARE USED TO PERFORM A SERVICE

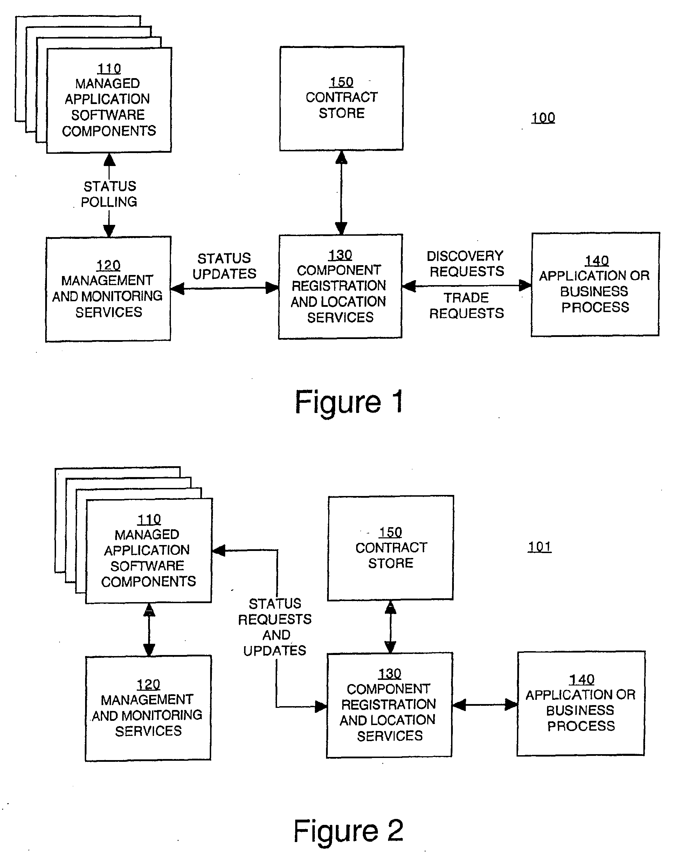

Figure 1 is a diagram showing the flow of information between blocks in a service discovery architecture 100 according to one embodiment of the present invention. The various blocks of service discovery architecture 100 can reside on the same or on different devices in a network of devices that can communicate with each other. These types of devices can include but are not limited to computer systems and storage devices.

The functionality of each of these blocks is described below. A single device can provide multiple functionality. For example, management and monitoring services 120 and component registration and location services 130 can be provided by the same device. Also, functionality can be distributed among multiple devices. For example, one managed application software component can be stored on one device and another managed application software component can be stored on a different device, or contract store 150 can be co-located with managed application software components 110, management and monitoring services 120, or component registration and location services 130.

Application or business process or other services 140 (hereinafter, "application or business process 140") aggregates services in an orchestrated way using business logic. It is appreciated that there may be a hierarchy of services. In other words, one service (provided by an application software component or components) may invoke another service (provided by another application software component or components). A service can be a combination of other services. Application or business process 140 can itself be a service used in another application or business process. Hence, application or business process 140 can refer to an application or business process as well as to other services.

Managed application software components 110 include application software components that can be called and used by application or business process 140. Each of these application software components, or a combination of these components, can be said to provide a service or services. A service can be provided by software, process or scripting. Hence, as used herein, "application software component" refers to software, process or scripting.

A particular service can be provided by different (e.g., competing) application software components. That is, an application or business process usually can choose among different application software components that provide or perform the same service.

In one embodiment, an application or business process 140 is implemented on a local device (e.g., a client or user device). In one such embodiment, the other elements of service discovery architecture 100 are accessed locally, or over the Internet, a wide area network (WAN), a local area network (LAN) or the like, point-to-point or point-to-multipoint, using integrated service management, integrated message-oriented middleware, the Internet, a WAN or LAN (e.g., Web services using HyperText Transfer Protocol), lower level transport protocols, or a combination of these. The other elements of service discovery architecture 100 are for locating and providing services, such as software services, that are utilized by application or business process 140.

Contract store 150 includes contracts that describe the functionality and location (e.g., bind information) of each of the managed application software components 110. It is appreciated that contracts can be stored in different repositories rather than in a single contract store as shown by Figure 1.

In essence, a contract describes the type of service provided by an application software component and what information is needed to invoke that service. The bind information provided by the contract includes, for example, a Uniform Resource Locator (URL) for the application software component. Other information, such as commercial terms, parameters for invoking the software, limitations on those parameters, and the like, can also be provided by the contract. Significantly, according to embodiments of the present invention, a contract includes information describing the status of an associated application software component. The contract can also include information that describes the different types of statuses that might be returned in response to a service discovery request or a trade request, and how the different types of statuses should be interpreted.

There can be multiple instances of a service. One contract can be used to represent all such instances, or multiple separate contracts can be used instead, each contract representing a single instance of a service or some subset of the multiple service instances. A status can be provided for each service instance associated with a contract, or a status can be provided for each separate contract.

Each of the managed application software components 110 is registered with component registration and location services 130. More specifically, the contracts associated with each of the application software components 110 are registered with component registration and location services 130. Component registration and location services 130 receives service discovery requests from an application or business process 140, and matches a request to an application software component or components that can provide the service. Trade requests can then be exchanged between application or business process 140 and the application software component(s) that were matched to the service discovery request. At some point, one of the application software components, or a set of such components, is selected to perform or provide the service. The selection can be made by a human user or automatically by application or business process 140.

Significantly, according to the embodiments of the present invention, the statuses of the various application software components of interest are provided to application or business process 140, or to a human user that is setting up that process, in response to a service discovery request or to a trade request. In the present embodiment, component registration and location services 130 provides the status information to application or business process 140, or to a human user that is setting up that process. Component registration and location services 130 can also update status information in contract store 150. For example, a contract can include a status indicator or status information for an associated application software component, and this status indicator/information can be maintained up-to-date by component registration and location services 130 based on the information provided by management and monitoring services 120.

In one embodiment, management and monitoring services 120 polls the managed application software components 110 to determine their respective statuses. A polling request can be in the form of a mock request for an application software component. In one such embodiment, the polling occurs continuously. In another such embodiment, the polling occurs according to a predetermined schedule. In the latter embodiment, the intervals between polling requests can be constant or variable.

In yet another embodiment, in lieu of a polling request, each of the application software components 110 automatically provide their respective statuses to management and monitoring services 120, either continuously or at various times. In one more embodiment, the status of an application software component is provided to management and monitoring services 120 when there is a change in status of that application software component.

Figure 2 is a diagram showing the flow of information between blocks in a service discovery architecture 101 according to another embodiment of the present invention. The various elements of service discovery architecture 101 are as described above in conjunction with Figure 1. In the embodiment of Figure 2, component registration and location services 130 polls the application software components 110 (or a specific subset thereof) specifically in response to a discovery request or a trade request. The status information is then forwarded to the initiator of the discovery or trade request (e.g., to application or business process 140).

In the various embodiments just described, status information is collected prior to execution of the application or business process 140. In one embodiment, In addition to or in lieu of the above, status information is collected after the application or business process 140 begins execution.

In addition to status information, availability information and/or performance Information can also be provided. Availability information reflects the historical record of the relative amount of time that an application software component is available over time. For example, availability information can include the percentage of time that an application software component has actually been available. Status information provides an Indication of the current state of an application software component and thus identifies whether a component is currently available, while availability information Indicates the probability that the component will be available when needed.

Performance information provides an indication of, for example, how fast a particular application software component can execute, or the computational resources required by a particular application software component. Performance information can provide a measure of a particular application software component's current state of performance versus its optimum state of performance, and as such can provide an indication of possible degraded performance. Also, as noted above, there can be multiple application software components that provide the same service. Performance information can thus provide one mechanism for differentiating between the various application software components.

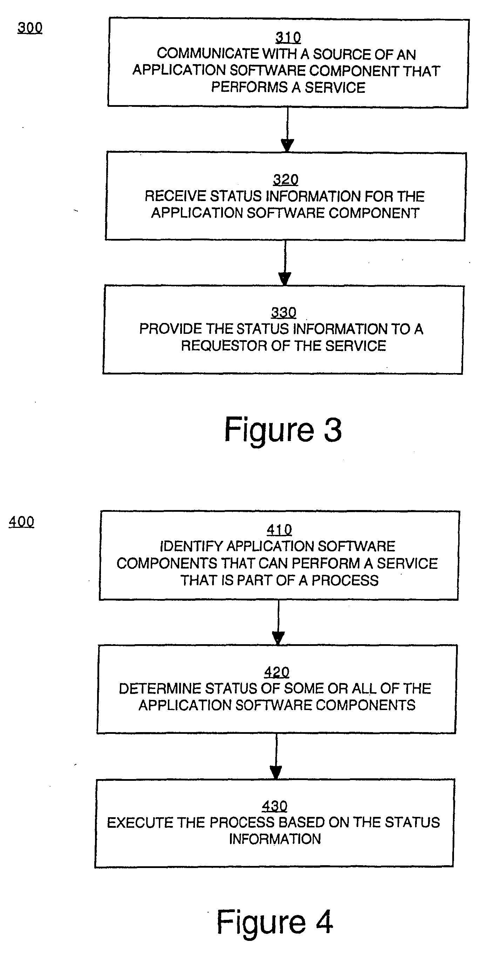

Figures 3 and 4 describe the embodiments of Figures 1 and 2 in practice, respectively. Figure 3 is a flowchart of a method for service discovery according to one embodiment of the present invention. Figure 4 is a flowchart of a method for performing a process according to one embodiment of the present invention.

Although specific steps are disclosed in flowcharts 300 and 400, such steps are exemplary. That is, embodiments of the present invention are well suited to performing various other steps or variations of the steps recited in those flowcharts. It is appreciated that the steps in the flowcharts may be performed in an order different than presented, and that not all of the steps in the flowcharts may be performed. All of, or a portion of, the methods described by flowcharts 300 and 400 can be implemented using computer-readable and computer-executable instructions which reside, for example, in computer-usable media of a computer system or like device.

Referring first to Figure 3, flowchart 300 is typically implemented by either management and monitoring services 120 or component registration and location services 130 of Figures 1 and 2, or a combination thereof. Flowchart 300 is described for singular Instances of application software components, services and processes; however, the description can be readily extended to multiple instances of each.

In step 310 of Figure 3, communication occurs with a source of an application software component that provides (performs) a service.

In step 320, status information for the application software component is received. In one embodiment, availability information is also received. In another embodiment, performance information is also received.

Steps 310 and 320 can be performed proactively (before a discovery or trade request for the application software component or the service it performs is received from an application or business process) or reactively (in response to a discovery or trade request). In one embodiment, communication with the source takes the form of a polling or demand request for status information. The polling request is initiated by, for example, management and monitoring services 120 or component registration and location services 130. The polling request can be issued continuously or at various time intervals. In another embodiment, status information is provided by the application software component even in the absence of a polling request. The status information can be provided by the application software component either continuously or at various time intervals, or it can be provided when there is a change in status of the application software component.

In step 330, the status Information Is provided to an application or business process that is requesting the service or the application software component. For example, application or business process 140 (Figure 1) requests a particular service that is matched to a particular application software component (as mentioned above, multiple application software components may be matched to the requested service). In one embodiment, in response to the request from application or business process 140, the status of the particular application software component is determined. Alternatively, in another embodiment, the status information is already determined ahead of the request from application or business process 140, as described above. In either case, the status information is returned to application or business process 140.

The current status of a service or of an application software component that provides the service is thus known to the application or business process (or to the person setting up that process) before the process is set up, or before the process is executed, also referred to as "up-front discovery." In addition, as mentioned above, the status of a service or application software component can be determined while the process is executing, also referred to as "as-required discovery". For example, execution of a process can begin, and the status of a service or application software component can be determined as required. It is appreciated that a combination of these scenarios can also be implemented. That is to say, status(es) can be determined before a process is executed or as the process is being set up, and later as the process is executed.

Accordingly, proactive behavior and contingency planning become possible. A process does not have to be established without knowing whether certain services or application software components will be available. As a result, a decision in the business logic of the process can be made to use another service or application software component in place of one that is unavailable. This decision can be made up front, or after the process is started. Alternatively, a decision can be made to not begin execution of the process until the status information indicates that all of the services and application software components used by the process are available.

Furthermore, "secondary" (backup) services and application software components can be identified and incorporated into the process. The secondary services and software components can be used should the "primary" service or software component be unavailable. The process can thereby have a dynamic nature as it executes. In other words, at each point in the process in which there is a transition to a different service or application software component, the process can use the status information to select an available service or application software component and continue executing, without having to defer execution should the primary service or application software component be available. Note that this can be accomplished without human intervention. Moreover, the process can be forward looking, selecting an execution path based on the availability of downstream services and application software components. That is, at a point in the process in which there is a transition to a different service or application software component, a decision can be made based not only on the status information of the immediate service or application software component, but also considering the status information of the other service and application software components that depend or flow from the immediate one.

As can be inferred from the above discussion, when a process is set up, it can incorporate contingencies and recovery mechanisms based on the status information, increasing the likelihood that the process can continue to execute with a reduced amount of delay, or without delay at all. By eliminating or reducing the instances in which the process is begun and then idled, computational resources are saved.

Referring now to Figure 4, a method for performing a process according to one embodiment of the present invention is described using flowchart 400. Flowchart 400 is typically implemented by an application or business process executing on a computer system, with or without human intervention.

In step 410, application software components that provide the services Included in the process are identified. As mentioned, this can be accomplished using service discovery and/or trade requests that match an application software component or components to a service.

In step 420, status information for the application software components is determined. In the present embodiment, the status information is determined in response to the discovery or trade requests. The status information is received from, for example, component registration and location services 130 of Figures 1 and 2, which in turn has either determined status in advance of the discovery and trade requests or in response to those requests. The status information can be determined before the process begins execution and/or while the process is executing.

In step 430 of Figure 4, the process is executed considering the status information. For example, one of the application software components identified in step 410 can be selected. If the status information indicates that the selected application software component is not available, then an alternative application software component can be selected. Alternatively, a different service, using a different application software component, can be performed instead. As another alternative, the service can be deferred until the selected application software component becomes available.

Other contingency actions can be performed as previously described herein. For example, execution of a process can be viewed as proceeding along different paths, depending on the availability of application software components at points along the paths. In other words, as discussed above, execution of a process can branch to one application software component or to another, depending on whether or not the "primary" application software component is available. Each execution path can be considered as including a set of application software components. One execution path can be selected over another by determining the statuses of the various application software components used along each path.

### MANAGING EXECUTION OF A PROCESS BASED ON AVAILABLE SERVICES

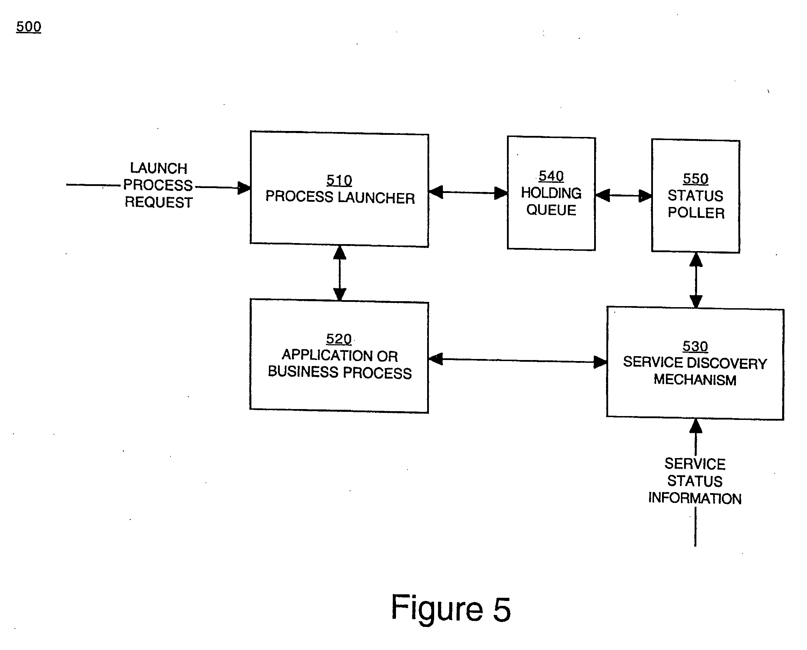

Figure 5 is a diagram showing the flow of information between blocks In a process execution management architecture 500 according to one embodiment of the present invention. The various blocks of process execution management architecture 500 can reside on the same or on different devices in a network of devices that can communicate with each other. These types of devices can include but are not limited to computer systems and storage devices.

The functionality of each of these blocks is described below. A single device can provide multiple functionality. For example, process launcher 510 and service discovery mechanism 530 can be provided by the same device or process launcher 510, holding queue 540 and status poller 550 can be provided by the same device. Also, functionality can be distributed among multiple devices. For example, process launcher 510, service discovery mechanism 530, and status poller 550 may reside on different devices.

Application or business process or other services 520 (hereinafter, "application or business process 520") aggregates services in an orchestrated way using business logic. It is appreciated that there may be a hierarchy of services. In other words, one service (provided by an application software component or components) may invoke another service (provided by another application software component or components). A service can be a combination of other services. Application or business process 520 can itself be a service used in another application or business process. Hence, application or business process 520 can refer to an application or business process as well as to other services. In one embodiment, application or business process 520 is application or business process 140 of Figures 1 and 2.

Process launcher 510 includes software for initiating a request to launch a process. In one embodiment, process 510 receives a launch process request initiating application or business process 520. The launch process request may include a process identification for identifying a particular application or business process 520 and any execution arguments used to initiate and/or execute the particular application or business process 620. As described above, application or business process 520 Include application software components (e.g., managed application software components 110) that can be called and used by application or business process 520. Each of these application software components, or a combination of these components, can be said to provide a service or services. A service can be provided by software, process or scripting. Hence, as used herein, "application software component" refers to software, process or scripting.

In one embodiment, an application or business process 520 is implemented on a local device (e.g., a client or user device). In one such embodiment, the other elements of process execution management architecture 500 are accessed locally, or over the Internet, a wide area network (WAN), a local area network (LAN) or the like, point-to-point or point-to-multipoint, using integrated service management, integrated message-oriented middleware, the Internet, a WAN or LAN (e.g., Web services using HyperText Transfer Protocol), lower level transport protocols, or a combination of these. The other elements of process execution management architecture 500 are for determining availability of services required by an application or business process 520, and for executing an application or business process 520 based on the available services.

Service discovery mechanism 530 is operable to determine the status of application software components used to perform services required by an application or business process 520. Status information provides an indication of the current state of an application software component and thus identifies whether a component is currently available. For example, an application software component may unavailable if its processing capability is below a particular desired performance level. In one embodiment, service discovery mechanism 530 is service discovery architecture 100 of Figure 1. In another embodiment, service discovery mechanism 530 is service discovery architecture 101 of Figure 2. In one embodiment of the present invention, the statuses of the various application software components of interest are provided to process launcher 510, in response to a launch process request. In the present embodiment, service discovery mechanism 530 provides the status information to process launcher 510. It should be appreciated that other service discovery mechanisms may be used, such as UDDI, and is not limited to service discovery architectures 100 and 101 as described at Figures 1 and 2.

Process launcher 510 can perform a number of functions based on the status information. If the status information indicates that all services required by an application or business process 520 are currently available, process launcher 510 will execute the application or business process 520. Alternatively, in one embodiment of the present invention, if the status information indicates that at least one service is not currently available, process launcher 510 may queue the application or business process 520 for a later execution or may determine if alternate services are currently available for providing the same functionality of currently unavailable services. In one embodiment, if the status information indicates that a required application software component is not available, then an alternative application software component can be selected by process launcher 510. Alternatively, a different service, using a different application software component, can be performed instead.

Other contingency actions can be performed as previously described herein. For example, execution of a process can be viewed as proceeding along different paths, depending on the availability of application software components at points along the paths. In other words, as discussed above, execution of a process can branch to one application software component or to another, depending on whether or not the "primary" application software component is available. Each execution path can be considered as including a set of application software components. One execution path can be selected over another by determining the statuses of the various application software components used along each path.

Holding queue 540 is operable to queue a launch process request in the event that service discovery mechanism 530 indicates that at least one application software component required by application or business process 520 is currently unavailable based on the status Information. Process launcher 510 records the identification of application or business process 520, any required execution arguments, and the identity of any unavailable application software components. In one embodiment, process launcher 510 also records a priority associated with application or business process 520. The recorded information is transmitted to holding queue 540 upon receiving status information indicating that an application software component is currently unavailable.

Status poller 550 is operable to determine whether previously unavailable resources are available for executing an application or business process 520 corresponding to a launch process request as stored in holding queue 540. Status poller 550 communicates with service discovery mechanism 530 to determine whether a previously unavailable application software component for performing a service is currently available. In one embodiment, status poller 550 periodically determines the availability of application software components of queued launch process requests in a round-robin format. In another embodiment, status poller 550 periodically determines the availability of only those application software components recorded as previously unavailable. In another embodiment, status poller 550 determines the availability of application software components according to the priority as stored at process launcher 510.

As described above, availability information and/or performance information for an application software component can also be provided. Availability information reflects the historical record of the relative amount of time that an application software component is available over time. For example, availability information can include the percentage of time that an application software component has actually been available. In one embodiment, the frequency at which status poller 550 determines whether a particular application software component is available is based on its historical availability. For example, if a particular application software component has high historical availability, status poller 550 may determine whether the application software component is available at a higher frequency than for an application software component with low historical availability.

In yet another embodiment, in lieu of a polling request, each of the application software components automatically provide their respective statuses to service discovery mechanism 530, either continuously or at various times. In one more embodiment, the status of an application software component is provided to service discovery mechanism 530 when there is a change in status of that application software component.

Upon receiving indication that all required application software components for application or business process 520 are currently available, status poller 550 notifies process launcher 510 that a queued launch process request may be executed. Process launcher 510 executes the particular launch process request as queued in holding queue 540. Application or business process 520 is executed, and the launch process request is removed from holding queue 540.

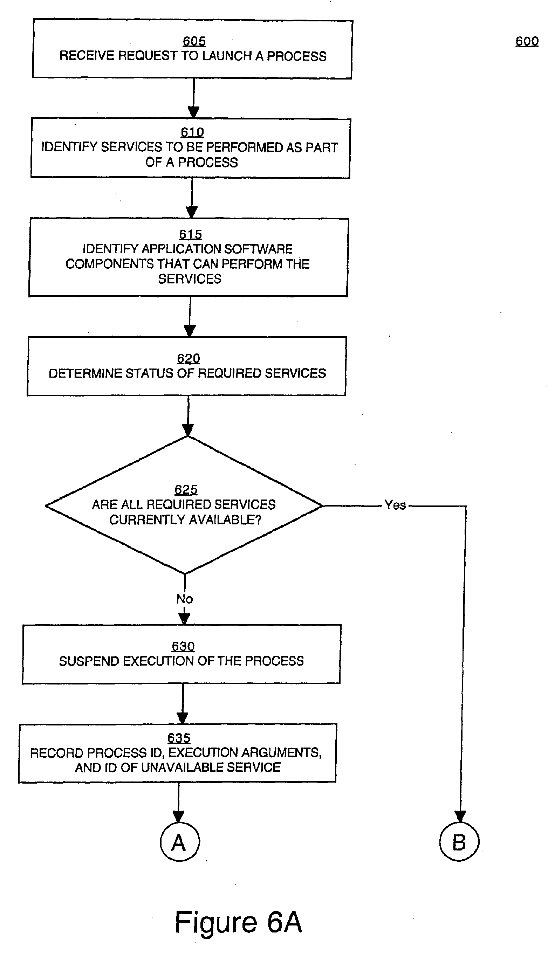

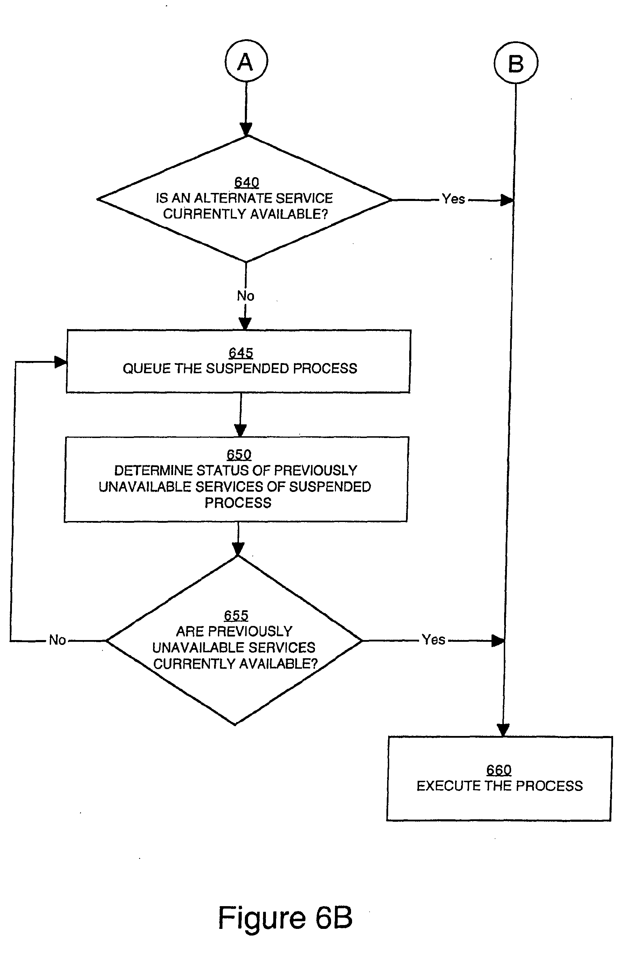

Figures 6A and 6B describe the embodiment of Figure 5 in practice. Figures 6A and 6B are a flowchart 600 of a method of managing execution of a process using "up front" service discovery according to one embodiment of the present invention. Although specific steps are disclosed in flowchart 600, such steps are exemplary. That is, embodiments of the present invention are well suited to performing various other steps or variations of the steps recited in those flowcharts. It is appreciated that the steps in the flowchart may be performed in an order different than presented, and that not all of the steps in the flowchart may be performed. All of, or a portion of, the methods described by flowchart 600 can be implemented using computer-readable and computer-executable instructions which reside, for example, in computer-usable media of a computer system or like device.

Referring Figure 6, flowchart 600 is typically implemented by process launcher 510, service discovery mechanism 530, holding queue 540 and status poller 550 of Figure 5, or a combination thereof. Flowchart 600 is described for singular instances of application software components, services and processes; however, the description can be readily extended to multiple instances of each.

In step 605 of Figure 6, a request to launch a process is received. The process may an application or a business process. The process comprises a plurality of services. A service may be provided by an application software component or a plurality of application software components. In one embodiment, the request comprises a process identification identifying the particular process and at least one execution argument associated with executing the process.

In step 610, the services to be performed as part of a process are identified. In step 615, application software components that can perform the services are identified. In step 620, the status of at least one service of the plurality of services is determined, wherein the status indicates current availability of the service.

In step 625, it is determined whether all of the services required by a process are currently available. If all of the services required by the process are currently available, the process is executed, as shown in step 660.

Alternatively, if at least one service required by the process is not currently available, execution of the process is suspended, as shown at step 630. In one embodiment, the process is shut down rather than idled. As such, computational resources are not being consumed by the process.

In step 635, a process identification and the execution arguments of the request to launch the process and identity of any currently unavailable services is recorded.

In step 640, it is determined whether an alternate service using a different application software component is available for performing the same functionality of the currently unavailable service. As described above, execution of a process can branch to one application software component or to another, depending on whether or not the "primary" application software component Is available. Each execution path can be considered as Including a set of application software components. One execution path can be selected over another by determining the statuses of the various application software components used along each path. In one embodiment, if one service is not available logic in the up-front discovery may substitute an alternate service if possible to enable the process to run. Logic used to determine whether the process launcher could also use alternative services. For example, the process launcher could poll for any services of a certain type becoming available when attempting to re-launch the service - once the service was re-launched the business service logic could validate the ability to run with an alternate service. If alternate service using a different application software component is currently available, the process is executed, as shown in step 660. Alternatively, if an alternate service is not currently available, execution of the method proceeds to step 645.

In step 645, the suspended process is queued for subsequent execution. In one embodiment, the request is queued in a holding queue (e.g., holding queue 540 of Figure 5). In another embodiment, the information recorded in step 635 is stored in queued. Status information can be evaluated before execution of the service or process is re-initiated.

In step 650, the status of a previously unavailable service of the process is determined. In one embodiment, step 650 is periodically performed at a frequency determined according to a predetermined time period. In another embodiment, the frequency at which step 650 is performed is based on the historical availability the application software component used for performing the unavailable service. In another embodiment, the frequency at which step 650 is performed is based on a priority associated with the process.

In step 655, it is determined whether the previously unavailable service of the suspended process is currently available. If all of the previously unavailable services required by the process are currently available, the process is executed, as shown In step 660. Alternatively, if at least one previously unavailable service required by the process Is not currently avallable, execution of the process is requeued, as shown in step 645.

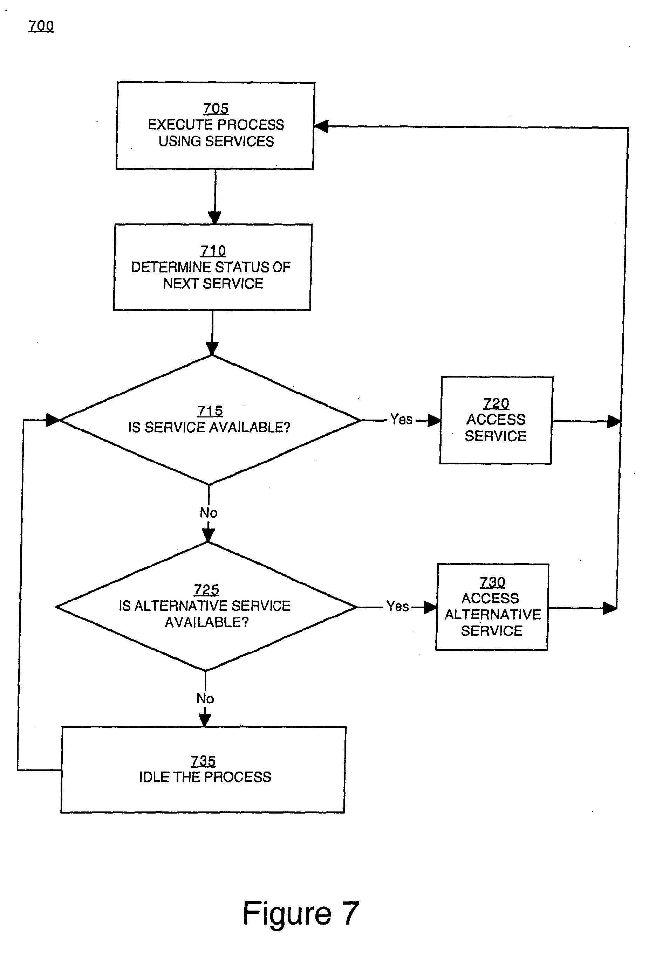

Figures 7 illustrates an embodiment of the invention implementing "as required" service discovery. Figure 7 is a flowchart 700 of a method of managing execution of a process using "as required" service discovery according to one embodiment of the present invention. Although specific steps are disclosed in flowchart 700, such steps are exemplary. That is, embodiments of the present invention are well suited to performing various other steps or variations of the steps recited in those flowcharts. It is appreciated that the steps in the flowchart may be performed in an order different than presented, and that not all of the steps in the flowchart may be performed. All of, or a portion of, the methods described by flowchart 700 can be implemented using computer-readable and computer-executable instructions which reside, for example, in computer-usable media of a computer system or like device.

Referring Figure 7, flowchart 700 is typically implemented by process launcher 510, service discovery mechanism 530, holding queue 540 and status poller 550 of Figure 5, or a combination thereof. Flowchart 600 is described for singular instances of application software components, services and processes; however, the description can be readily extended to multiple instances of each.

In step 705 of Figure 7, a process is executed using services (e.g., step 660 of Figure 6). In step 710 the status of the next service is determined, wherein the status indicates current availability of the service.

In step 715, it is determined whether the next service required by a process is currently available. If the next service required by the process is currently available, the service is accessed, as shown in step 720. Process 700 then returns to step 705, and continues to execute the process using the service.

Alternately, if the next service required by the process is not currently available, it is determined whether an alternate service is available, as shown at step 725. If an alternate service Is avallable, the alternate service Is accessed, as shown at step 730. Process 700 then returns to step 705, and continues to execute the process using the service.

If an alternate service is not available, process 700 proceeds to step 735, where the process is idled in the process engine while waiting on the service. In one embodiment, a checkpoint is generated to store what service the process is waiting to become available. Process 700 periodically returns to step 715 to determine whether the service becomes available.

In summary, embodiments of the present invention provide methods and systems for managing execution of an application or business process based on whether or not services (provided by application software components) are currently available. Accordingly, it is possible to commence execution of an application or business process without consuming computational resources if a service is unavailable due to idling. In essence, embodiments of the present invention provide for deferring execution of an application or business process until necessary or alternative services are available, reducing demand on computational resources.

Embodiments of the present invention are thus described. While the present invention has been described in particular embodiments, it should be appreciated that the present invention should not be construed as limited by such embodiments, but rather construed according to the following claims.

## Claims

1. A method (600) of managing execution of a process, said method comprising:
receiving (605) a request to execute said process, said process comprising a plurality of services;
determining (620) a status of at least one service of said plurality of services, wherein said status indicates current availability of said service;
suspending (630) execution of said process if at least one said service is not currently available; and
queuing (645) suspended process for subsequent execution.

2. The method as recited at Claim 1 wherein said request comprises a process identification and at least one execution argument associated with executing said process.

3. The method as recited in Claim 2 further comprising recording (635) said process identification, said execution argument and identity of currently unavailable service.

4. The method as recited in any preceding claim further comprising:
determining (650) whether a previously unavailable service of said suspended process is currently available; and
requeuing (645) said suspended process for subsequent execution if said previously unavailable service is not currently available.

5. The method as recited in any preceding claim further comprising:
determining (640) whether an alternate service is available for performing functionality of currently unavailable service; and
requeuing (645) said suspended process for subsequent execution if said alternate service is not currently available.

6. The method as recited in Claim 4 further comprising executing (660) said suspended process upon said unavailable service becoming currently available.

7. The method as recited in any preceding claim wherein said determining availability of at least one said service of said plurality of services comprises:
communicating with a source of an application software component for performing said service; and
receiving information descriptive of said status of said application software component.

8. A process execution management system comprising:
a process launcher (510) for receiving a request to execute a process, wherein said process comprises a plurality of services, and for executing said process according to a status of at least one service of said plurality of services; and
a service discoverer (520) for determining said status of said service, wherein said status indicates current availability of said service.

9. The process execution management system of Claim 8 wherein said request comprises a process identification and at least one execution argument associated with executing said process.

10. A computer-readable medium having computer-readable program code embodied therein for causing a computer system to perform a method of managing execution of a process, said method comprising:
receiving a request to execute said process, said process comprising a plurality of application software components having the capability to perform a particular service that is part of said process;
determining a status of at least one application software component of said plurality of application software components, wherein said status indicates current availability of said application software component;
determining whether an alternate application software component is available for performing said service if said application software component is currently unavailable; and
executing said process according to whether said alternate application is currently available for performing said service.
